# EUROPEAN PATENT APPLICATION

(11) **EP 3 671 204 A1**
(43) Date of publication of application: **24.06.2020**
(21) Application number: 19275149.3
(22) Date of filing: 18.12.2019
(51) Int. Cl.: G01N 29/04, G01N 29/24, G01N 29/26, G01N 21/954, F16L 55/38, F16L 55/48, F16L 101/30

(54) **PIG FOR INSPECTING A TUBULAR OBJECT**

(30) Priority: 19.12.2018 GB 201820686
(71) Applicant: Cokebusters Limited, Chester CH4 0GZ (GB)
(72) Inventor: PHIPPS, Jonathan Harry, Neston, Cheshire CH64 6QN (GB); THEWSEY, David John, Wrexham, LL11 3TP (GB); LEWIS, Hugh Mark, Didcot, Oxfordshire OX11 0NF (GB)
(74) Representative: Potter Clarkson

(57) **Abstract**

There is provided a pig (20) for inspecting a tubular object. The pig (20 is configured for travel along an interior of the tubular object. The pig comprises a transducer body (26). The transducer body (26) includes at least one transducer (32) for detecting a condition of the tubular object. The or each transducer (32) is configured to, in use, move in a plane that is perpendicular or substantially perpendicular to a direction of travel of the pig (20) along the interior of the tubular object.

## Description

This invention relates to a pig for inspecting a tubular object, and to a method of using a pig to inspect a tubular object, preferably for use with pipes, pipelines, tubes and tubing. Such tubular objects may come in a variety of shapes, such as straight, bent, serpentine and meandering.

Tubing systems in refining furnaces, boilers, fired heaters and the like typically have a sinusoidal path to optimise the exposure of the contents of the tubing systems to heat. Such a sinusoidal path is frequently referred to as being serpentine. In a typical tubing system, a product to be treated usually passes through the tubing system that has horizontally and/or vertically set tubes, and the passage of the product through the tubing system may be in a horizontal direction, a downward direction, an upward direction, or a combination thereof. Some tubing systems may include a section of closely packed tubes that may be used to, for example, raise a temperature of the product to be treated by way of convention heating. The pre-heated product may then be passed to a subsequent section of the tubing system in which there is more space between the tubes, and such tubes may be heated by way of radiant heating. Typically, in both sections, the tubing system includes straight tube sections joined by bent tube sections, which may be semicircular (also known as U-bends) or may be box headers with sharp bends in the form of 90 degree turns, sometimes referred to as "horseshoes" and/or "mule ears". Other tubing systems may include at least one helical coiled tube or at least one arbour coiled tube.

The term "pig" is used to refer to devices that are passed through a pipe or tubing whether for cleaning purposes or for monitoring the condition of the pipe or tubing. Pigs may be used for aiding separation of product from the pipe or tubing, in particular material buildup on interior walls of the pipe or tubing, for fluid transport separation, etc.

Pigs may be used to inspect, detect and record conditions of a pipe or tubing from the inside to check the surface conditions of the interior and/or exterior of the pipe or tubing, to check for material deposits on the interior and/or exterior walls of the pipe or tubing and to check for degradation and irregularities in the pipe or tubing. This is important because, if a pipe or tubing is blocked, breached or has a compromised structural integrity during its operation, it could not only lead to costly and disruptive unscheduled downtime but also result in life threatening conditions for nearby people.

In order for efficient and safe operation of a tubing system, it is important that the tubing system is not only periodically cleaned and free from deposits, but also inspected to ensure the walls of the tubing system are free from undesirable deposits, tube material condition anomalies, wall thinning and/or various forms of metallurgical degradation. Inspection of a pipe or tubing may be performed to assess the need for cleaning and/or repair or to assess the effectiveness of previous cleaning and/or repair.

Conventionally inspections of a pipe or tubing have been performed online through viewing windows and/or by inspecting the pipe manually during shutdown of the pipe or tubing. Monitoring of the condition of a pipe or tubing have also been conventionally carried out by radiography, precision monitoring of flow and pressure, thermal imaging, and hand-held non-destructive testing (NDT) such as ultrasonic testing (UT). However, each of these techniques is limited in its usefulness and has its disadvantages. Manual NDT can be time consuming, for example taking 6-7 days fully to inspect an entire furnace, and also requires abrasive cleaning of the outer wall of the tubing system of the furnace in order to enable successful inspection. Furthermore, a furnace would normally need internal scaffolding to enable the inspection to be carried out, thus wasting time. Thermal imaging usually involves searching for hotspots as an indication of contamination, but is not suitable for inspecting closely packed tubes such as seen in convection heating sections. When monitoring is carried out whilst the furnace is in operation, some areas of the tubing system may not be visible through the viewing windows. Furthermore, the far side of the tubing system is either difficult or impossible to monitor using the conventional monitoring techniques. Accordingly it may be necessary to replace one or more sections of the tubing system according to a supplier-provided lifetime warranty, which can result in not only unnecessary replacement of tube sections but also unnecessary and costly downtime of the tubing system.

It is known to provide a tethered pig with monitoring equipment and to send it through a pipe. Operation of the equipment is controlled from outside the pipe via a cable. Responses detected by the on-board monitoring equipment are transmitted back along the cable to an external monitoring unit.

According to a first aspect of the invention, there is provided a pig for inspecting a tubular object, the pig configured for travel along an interior of the tubular object, the pig comprising a transducer body, the transducer body including at least one transducer for detecting a condition of the tubular object, wherein the or each transducer is configured to, in use, move in a plane that is perpendicular or substantially perpendicular to a direction of travel of the pig along the interior of the tubular object.

In use, the or each transducer can be used to detect the condition of the tubular object. The condition of the tubular object may include, but is not limited to, a size of a bore of the tubular object, a thickness of a wall of the tubular object, a fault in a wall of the tubular object, and a thickness of material build-up on a wall of the tubular object. As the pig travels along the interior of the tubular object, the or each transducer can be utilised to detect the condition of the tubular object along the direction of travel of the pig along the interior of the tubular object.

A transducer with limited coverage would only be capable of detecting the condition of part of the tubular object at a given position along the direction of travel of the pig along the interior of the tubular object. Consequently, the condition of the remaining part of the tubular object falling outside the limited coverage of the transducer cannot be detected by the transducer. This not only results in an inaccurate determination of the overall condition of the tubular object, but can have disastrous consequences due to the inability to detect wall faults, such as localised defects (in particular, localised metallurgical defects for metallic walls) and/or substantial material build-up inside or outside the tubular object.

On the other hand, the configuration of the pig of the invention enables the movement of the or each transducer in the plane that is perpendicular or substantially perpendicular to the direction of travel of the pig along the interior of the tubular object. In other words, at any given point in time, the or each transducer is enabled to move relative to a cross-section of the tubular object that is perpendicular or substantially perpendicular to the direction of travel of the pig along the interior of the tubular object. By moving the or each transducer in this manner as the pig travels along the interior of the tubular object, the coverage of the or each transducer can be readily extended to enable detection of the condition of a larger part, or the whole, of the tubular object. This beneficially avoids the aforementioned downsides of using a transducer with limited coverage. In addition, when the pig includes a plurality of transducers, the individual transducers can be moved to provide overlapping coverage in order to provide a more accurate and reliable determination of the condition of the tubular object.

Otherwise, if the position of the or each transducer is fixed in the plane that is perpendicular or substantially perpendicular to the direction of travel of the pig along the interior of the tubular object, it would be necessary to either employ an increased quantity of transducers or a more complex transducer design to increase the transducer coverage. This would not only increase the overall cost and complexity of the pig, but also add to the size and weight of the pig which may prevent its use in inspection of smaller and lighter tubular objects. Moreover, even if an increased quantity of transducers or a more complex transducer design is employed, it might still not be possible for certain types of transducers to obtain full transducer coverage due to physical or sensing limitations.

Additionally, if the position of the or each transducer is fixed in the plane that is perpendicular or substantially perpendicular to the direction of travel of the pig along the interior of the tubular object, detection of the condition of a larger part, or the whole, of the tubular object can be achieved by combining the detection results from multiple runs of the pig travelling along the interior of the tubular object, where the orientation of the entire pig relative to the tubular object is changed for each run. This however increases the overall time spent in detecting the condition of the tubular object due to the need to carry out multiple runs.

In a preferred embodiment of the invention, the or each transducer may be configured to, in use, rotate in the plane that is perpendicular or substantially perpendicular to the direction of travel of the pig along the interior of the tubular object, and/or the or each transducer may be configured to, in use, move around part or the whole of a cross-sectional perimeter of the transducer body. Enabling the movement of the or each transducer in this manner provides an efficient way of extending the coverage of the or each transducer to detect the condition of a larger part, or the whole, of the tubular object. Furthermore, such rotation of the or each transducer may be configured to provide a transducer coverage that follows a rotating pattern, track or path (such as a helical pattern, track or path) along the length of the tubular object.

By transmitting pulsing signals at a sufficient frequency and simultaneously rotating the or each transducer at a sufficient angular velocity, it is possible to achieve overlapping circumferential and/or axial transducer coverage, preferably up to 100% overlapping circumferential and/or axial transducer coverage that does not have any separation distance between adjacent measurements. This can be repeated throughout the travel of the pig along the interior of the tubular object.

In embodiments of the invention, the pig may include a support body configured to, in use, support the transducer body when the pig is travelling along the interior of the tubular object. The support body may be configured to, in use, engage an interior wall of the tubular object so as to align the transducer body relative to the tubular object. The support body may include one or more alignment implements, such as flanges and brushes, that are arranged to maintain a desired alignment, preferably central alignment, of the transducer body within the tubular object.

It is advantageous to be able to align the transducer body relative to the tubular object in order to place the or each transducer in an optimal sensing position relative to the tubular object.

The structure of the support body may vary. For example, the support body may include at least one support body section, and the transducer body may be operably connected to the or each support body section to permit movement of the transducer body in the plane that is perpendicular or substantially perpendicular to a direction of travel of the pig along the interior of the tubular object. This provides a reliable means of enabling the movement of the or each transducer in the plane that is perpendicular or substantially perpendicular to a direction of travel of the pig along the interior of the tubular object.

The transducer body may have a single transducer or a plurality of transducers for detecting a condition of the tubular object. The quantity of transducers of the transducer body depends on the condition detection requirements of the tubular object.

When the transducer body includes a plurality of transducers, the plurality of transducers may be arranged about a cross-sectional perimeter of the transducer body. This allows the multiple transducers to detect different elements of the condition of the tubular object at any given point in time, thus reducing the amount of time required to determine the condition of the tubular object.

In further embodiments of the invention, the or each transducer may include a transmitter and a receiver. The transmitter may be configured to, in use, transmit a signal for enabling the or each transducer to detect a condition of the tubular object. The receiver may be configured to, in use, receive the signal transmitted by the transmitter, which may be reflected off an internal or external surface of a wall of the tubular object or material build-up on the interior or exterior wall of the tubular object.

The transmitter may be configured to transmit any type of signal suitable for enabling detection of the condition of the tubular object. Examples of suitable signals include, but are not limited to, acoustic signals and electromagnetic radiation signals.

The transmitter may be configured to transmit a continuous or pulsing signal. When the transmitter is configured to transmit a pulsing signal, the frequency of the pulsing signal may be controlled to match the movement of the corresponding transducer.

It will be appreciated that the or each transducer may omit the transmitter, and the receiver of the or each transducer may be configured to, in use, receive a signal transmitted by an external transmitter that does not form part of the pig of the invention. Such an external transmitter may be located inside or outside the tubular object.

In still further embodiments of the invention, the pig may include a drive unit operably coupled to the transducer body. The drive unit may be configured to, in use, mechanically drive the movement of the or each transducer in the plane that is perpendicular or substantially perpendicular to the direction of travel of the pig along the interior of the tubular object. This enables the pig to independently enable the movement of the or each transducer, without requiring external intervention.

The drive unit may vary in configuration as long as it is capable of mechanically driving the movement of the or each transducer in the plane that is perpendicular or substantially perpendicular to the direction of travel of the pig along the interior of the tubular object. Examples of the drive unit are described as follows.

In a first example, the drive unit may include a motor operably coupled to the transducer body. The motor may be configured to, in use, mechanically drive the movement of the or each transducer in the plane that is perpendicular or substantially perpendicular to the direction of travel of the pig along the interior of the tubular object.

The motor provides active control over the movement of the or each transducer as the pig travels along the interior of the tubular object. In addition, the settings of the motor can be altered to adjust the movement of the or each transducer to match the condition detection requirements of the tubular object.

In a second example, the drive unit may include a fluid energy conversion mechanism operably coupled to the transducer body. The fluid energy conversion mechanism may be arranged to, in use, receive a fluid and permit the fluid to flow therethrough. The fluid energy conversion mechanism may be configured to, in use, convert energy from the flowing fluid to mechanically drive the movement of the or each transducer in the plane that is perpendicular or substantially perpendicular to the direction of travel of the pig along the interior of the tubular object. Preferably the fluid energy conversion mechanism is configured to, in use, convert energy from the flowing fluid to mechanically drive the rotation of the or each transducer in the plane that is perpendicular or substantially perpendicular to the direction of travel of the pig along the interior of the tubular object.

The fluid energy conversion mechanism provides a passive and more energy-efficient mechanism for enabling the movement of the or each transducer as the pig travels along the interior of the tubular object.

Examples of the fluid energy conversion mechanism include, but are not limited to, a turbine or impellor.

Optionally the fluid energy conversion mechanism may include a flow rate controller to control a flow rate of fluid flowing through the fluid energy conversion mechanism. This provides the fluid energy conversion mechanism with a way of adjusting the movement of the or each transducer to match the condition detection requirements of the tubular object.

It would be appreciated that the drive unit may include both the motor and the fluid energy conversion mechanism, or the motor without the fluid energy conversion mechanism, or the fluid energy conversion mechanism without the motor.

In embodiments employing the use of the drive unit, the pig may include a speed regulator operably interconnecting the drive unit and the transducer body. The speed regulator may be configured to, in use, control a speed of movement of the or each transducer in the plane that is perpendicular or substantially perpendicular to the direction of travel of the pig along the interior of the tubular object. In such embodiments, the speed regulator may include a centrifugal clutch.

The provision of a speed regulator in the pig of the invention is useful to ensure the consistency of the movement of the or each transducer throughout the inspection of the tubular object.

In embodiments of the invention, the pig may include a position detector configured to, in use, measure a position of the or each transducer in the plane that is perpendicular or substantially perpendicular to the direction of travel of the pig along the interior of the tubular object. This enables the position of the or each transducer at any given time to be mapped to the correct orientation of the tubular object in order to provide an accurate determination of the condition of the tubular object.

In a preferred embodiment of the invention, the position detector may be configured to, in use, measure an angular position of the or each transducer in the plane that is perpendicular or substantially perpendicular to the direction of travel of the pig along the interior of the tubular object.

In embodiments of the invention employing the use of a position detector, the position detector may include, for example, at least one motion tracking device, at least one gyroscope, and/or at least one accelerometer.

In further embodiments of the invention, the pig may include an energy harvesting device operably coupled to the transducer body. The energy harvesting device may be configured to, in use, convert kinetic energy from the movement of the or each transducer into electrical energy. In such embodiments, the energy harvesting device may include an electrical generator.

The pig may include a rechargeable battery to store the harvested electrical energy.

The provision of the energy harvesting device enables the harvesting of energy from the movement of the or each transducer to provide power to one or more electrical or electronic components of the pig. This in turn increase the longevity of use of the pig, which allows the pig to be used to inspect longer tubular objects.

Optionally the pig may include a humidity detector to detect an internal humidity of the pig. This permits determination of a dry interior of the pig or a warning of fluid ingress into the pig.

Further optionally the pig may include a single body configuration. In use, the single body houses the components of the pig. The single body is particularly useful for inspecting tubular objects of varying sizes, and maneuvering and passing more easily through a variety of tubular object geometry,

According to a second aspect of the invention, there is provided a method of using a pig to inspect a tubular object, the pig configured for travel along an interior of the tubular object, the pig comprising a transducer body, the transducer body including at least one transducer for detecting a condition of the tubular object, the method comprising the step of moving the or each transducer in a plane that is perpendicular or substantially perpendicular to a direction of travel of the pig along the interior of the tubular object.

The advantages of the pig of the first aspect of the invention and its embodiments apply mutatis mutandis to the method of the second aspect of the invention and its embodiments.

In the method of the invention, the pig may be in accordance with the first aspect of the invention or any one of its embodiments.

The method may include the step of rotating the or each transducer in the plane that is perpendicular or substantially perpendicular to the direction of travel of the pig along the interior of the tubular object.

The method may include the step of moving the or each transducer around part or the whole of a cross-sectional perimeter of the transducer body.

The method may include the steps of providing a support body to support the transducer body when the pig is travelling along the interior of the tubular object, and configuring the support body to engage an interior wall of the tubular object so as to align the transducer body to the tubular object. Such a method may further include the step of providing the support body including at least one support body section, wherein the transducer body is operably connected to the or each support body section to permit movement of the transducer body in the plane that is perpendicular or substantially perpendicular to a direction of travel of the pig along the interior of the tubular object.

The method may include the steps of providing the transducer body including a plurality of transducers for detecting a condition of the tubular object, and arranging the plurality of transducers about a cross-sectional perimeter of the transducer body.

The method may include the step of transmitting a signal for enabling the or each transducer to detect a condition of the tubular object, and receiving the transmitted signal. Such a step may include the provision of the or each transducer including a transmitter and a receiver. The transmitter may be configured to, in use, transmit a signal for enabling the or each transducer to detect a condition of the tubular object. The receiver may be configured to, in use, receive the signal transmitted by the transmitter, which may be reflected off an internal or external surface of a wall of the tubular object.

The method may include the steps of providing a drive unit operably coupled to the transducer body, and configuring the drive unit to mechanically drive the movement of the or each transducer in the plane that is perpendicular or substantially perpendicular to the direction of travel of the pig along the interior of the tubular object.

The method may include the steps of providing the drive unit including a motor operably coupled to the transducer body, and configuring the motor to mechanically drive the movement of the or each transducer in the plane that is perpendicular or substantially perpendicular to the direction of travel of the pig along the interior of the tubular object.

The method may include the steps of providing the drive unit including a fluid energy conversion mechanism operably coupled to the transducer body, arranging the fluid energy conversion mechanism to receive a fluid and permit the fluid to flow therethrough, and configuring the fluid energy conversion mechanism to convert energy from the flowing fluid to mechanically drive the movement of the or each transducer in the plane that is perpendicular or substantially perpendicular to the direction of travel of the pig along the interior of the tubular object.

The method may include the step of configuring the fluid energy conversion mechanism to convert energy from the flowing fluid to mechanically drive the rotation of the or each transducer in the plane that is perpendicular or substantially perpendicular to the direction of travel of the pig along the interior of the tubular object. The fluid energy conversion mechanism may include a turbine or impellor.

The method may include the step of providing the fluid energy conversion mechanism including a flow rate controller to control a flow rate of fluid flowing through the fluid energy conversion mechanism.

The method may include the steps of providing a speed regulator to operably interconnect the drive unit and the transducer body, and configuring the speed regulator to control a speed of movement of the or each transducer in the plane that is perpendicular or substantially perpendicular to the direction of travel of the pig along the interior of the tubular object. The speed regulator may include a centrifugal clutch.

The method may include the step of measuring a position of the or each transducer in the plane that is perpendicular or substantially perpendicular to the direction of travel of the pig along the interior of the tubular object. The method may include the step of measuring an angular position of the or each transducer in the plane that is perpendicular or substantially perpendicular to the direction of travel of the pig along the interior of the tubular object. These steps may include the provision of a position detector to carry out the measurement. The position detector may include a gyroscope.

The method may include the step of converting kinetic energy from the movement of the or each transducer into electrical energy. This step may include the provision of an energy harvesting device operably coupled to the transducer body to carry out the conversion from kinetic energy into electrical energy. The energy harvesting device may include an electrical generator.

In the method of the invention, the pig may include a humidity detector to detect an internal humidity of the pig.

In the method of the invention, the pig may include a single body configuration.

Preferred embodiments of the invention will now be described, by way of non-limiting examples, with reference to the accompanying drawings in which:
Figure 1 shows a pig according to a first embodiment of the invention;
Figure 2 shows a cross-section of the pig of Figure 1;
Figure 3 shows a plurality of transducers arranged about a circumference of a transducer body of the pig of Figure 1;
Figure 4 shows the coverage of the plurality of transducers of Figure 3 when the plurality of transducers is in a first angular position about the circumference of the transducer body;
Figure 5 shows the coverage of the plurality of transducers of Figure 3 when the plurality of transducers is in a second angular position about the circumference of the transducer body;
Figure 6 shows a superimposition of the transducer coverages of Figures 4 and 5; and
Figure 7 shows a cross-section of a pig according to a second embodiment of the invention.

The figures are not necessarily to scale, and certain features and certain views of the figures may be shown exaggerated in scale or in schematic form in the interests of clarity and conciseness.

The following embodiments of the invention are described with reference to their use in inspection of tubes and tubing, such as fired heater, furnace or boiler process tubes, but it will be appreciated that the following embodiments of the invention may also be used in inspection of other tubular objects, such as pipes and pipelines.

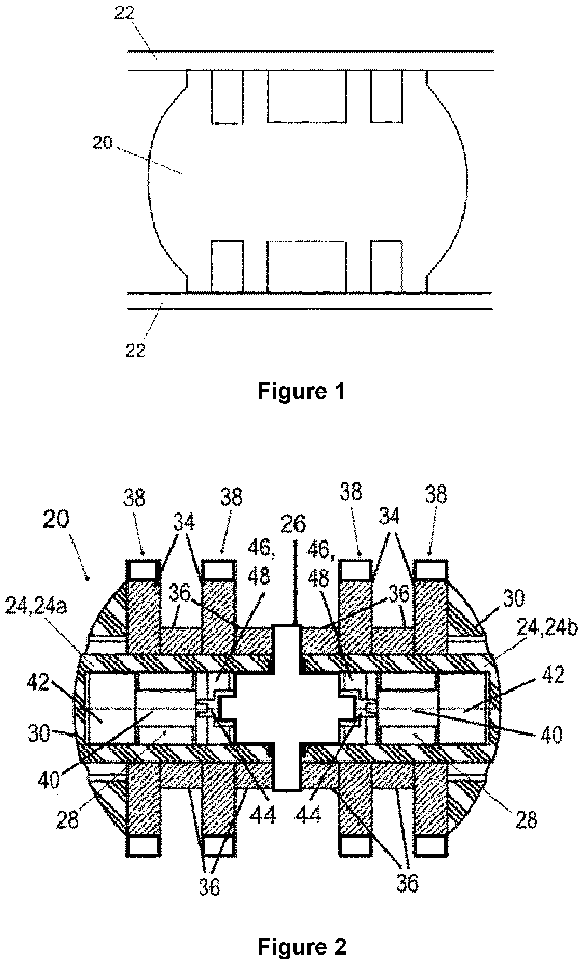

A pig according to a first embodiment of the invention is shown in Figure 1 and is designated generally by the reference numeral 20.

In use, in order to obtain information about the condition of a tube 22, the pig 20 is configured to carry out an inspection of the tube 22 while it travels along an interior of the tube 22. The pig 20 may be driven along the interior of the tube 22 using a fluid pumping machine to apply fluid pressure to the rear of the pig 20.

The pig 20 comprises a support body 24, a transducer body 26, and rotary drive units 28. The internal structure of the pig 20 is shown in Figure 2. The support body 24, transducer body 26 and rotary drive units 28 are combined in an integral single body. The single body is preferably substantially cylindrical, substantially symmetrical and provided with a nose section at both ends of the single body.

It is envisaged that, in alternative embodiments of the invention, the support body 24, transducer body 26 and rotary drive units 28 may be arranged in two or more separate bodies connected together by an inflexible or flexible link, such as a wire or cable.

The support body 24 comprises a pair of hollow, cylindrical support body sections 24a,24b arranged coaxially to define a cylindrical support body 24, with nose cones 30 respectively arranged at the front and rear ends of the support body 24.

The single body may be made of any suitable material that allows the passage of transmitted and received signals, and has sufficient strength to withstand pressures within the tube 22, for example water pressures up to 250 psi or higher. It is preferable for the single body to be lightweight to enable the pig 20 to have a neutral, or near neutral, buoyancy in order to be readily driven in a vertical upwards direction of the tube 22. At least part of the single body, especially the support body 24, is preferably made of fibre reinforced epoxy resin, carbon fibre or Kevlar, but can be additionally or alternatively made of one or more other suitable materials, such as polycarbonate, carbon fibre reinforced plastic, carbon fibre reinforced polycarbonate, glass reinforced polycarbonate, polyether ether ketone (PEEK), titanium, aluminium, and stainless steel. Carbon fibre and Kevlar have been found to be particularly useful materials for constructing at least part of the single body in order to achieve a combination of strength, resistance to water ingress and neutral buoyancy.

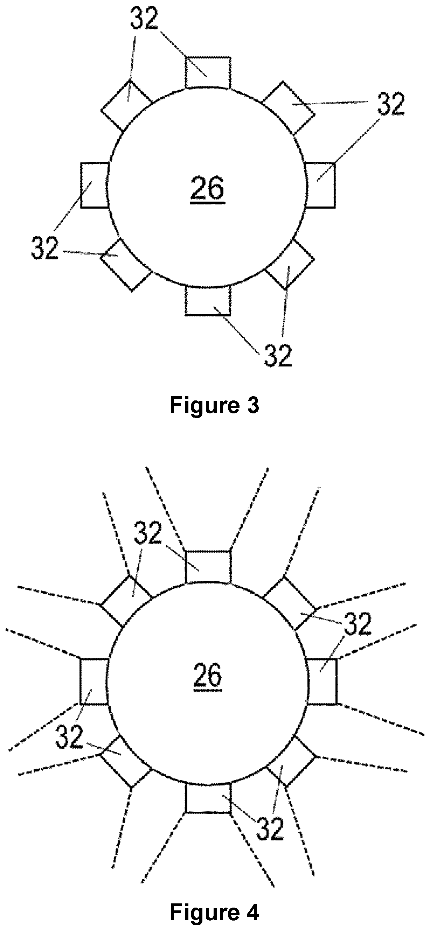

The transducer body 26 is arranged between the support body sections 24a,24b such that the transducer body 26 is centrally positioned along the length of the support body 24. The transducer body 26 includes a plurality of transducers 32 spaced apart circumferentially about a cross-sectional perimeter of the transducer body 26 to define a ring of transducers 32. Figure 3 shows the ring of transducers 32. Each transducer 32 is arranged to project radially away from the transducer body 26 and out of the support body 24 so as to be exposed to the outside. In other embodiments of the invention, each transducer 32 may have a different construction, e.g. each transducer 32 may be embedded in the transducer body 24. The quantity of transducers 32 may vary depending on the condition detection requirements of the tube 22. For example, the quantity of transducers may be 8, 16 or 32, but could be more or fewer.

The transducer body 26 further includes an internal compartment (not shown) for housing electronics associated with the transducers 32, such as an electrical signal generator, a microprocessor, a data logger (e.g. a memory) for storing the data analysed by the microprocessor, an electrical power supply (e.g. a battery), and optionally an accelerometer, a humidity detector, and a temperature detector. The accelerometer enables an accurate identification of the location of bends in the tube 22. The humidity detector provides an indication of the internal humidity in order to provide confirmation of a dry interior or a warning of fluid ingress. The temperature detector enables monitoring of the temperature external to the pig 20, in particular the fluid temperature inside the tube 22. Detection of the fluid temperature enables the electronics associated with the transducers 32 (in particular, the microprocessor) to compensate for any variation in speed of a signal (such as an ultrasonic signal) travelling through the fluid in the tube 22 that is caused by a change in fluid temperature. In other embodiments of the invention, it is envisaged that the electronics associated with the transducers 32 may be housed elsewhere in the pig 20, such as the support body 24.

Each transducer 32 includes a transmitter and a receiver. In use, a given transmitter transmits a signal towards the wall of the tube 22, and the corresponding receiver receives the signal after it is reflected off an internal or external surface of the wall or off material build-up on an interior or exterior wall of the tube 22. The transmitted signal may be a continuous or pulsing signal.

In the embodiment shown, each transducer 32 is in the form of an ultrasonic transducer that is configured to both transmit and receive a signal (or signals). The ultrasonic transducer 32 includes a piezocomposite crystal, which functions as a transmitter to convert an electrical signal supplied by the electronics, namely the electrical signal generator, into a transmitted ultrasonic signal. The transmitted ultrasonic signal is transmitted towards the wall of the tube 22, and is then reflected off an internal or external surface of the wall of the tube 22, or off material build-up on an interior or exterior wall of the tube 22, back towards the piezocomposite crystal. In this way, the piezocomposite crystal is able to receive a first reflected ultrasonic signal from the internal wall surface of the tube 20, and also receive a second reflected ultrasonic signal from the external wall surface of the tube 20. The piezocomposite crystal then functions as a sensor that converts the received (reflected) ultrasonic signal(s) into an electrical signal (or electrical signals) for analysis by the microprocessor.

The microprocessor then processes the received electrical signal information for conversion into a length measurement using the time-of flight principle, which is based on the calculation of a distance from a known ultrasonic speed and the time taken between the transmitted and received ultrasonic signals. Hence, the receipt of both the first and second reflected ultrasonic signals enables the calculation of the inner and outer radii of the tube 22, which can be used to calculate the wall thickness of the tube 20. Such calculation permits the detection of localised defects in the wall of the tube 22 and/or material build-up on an interior or exterior wall of the tube 22.

In the embodiment shown, the transmitter is configured to transmit an ultrasonic signal, but it will be appreciated that the transmitter may be configured to transmit other types of acoustic or electromagnetic radiation signals. For example, each transmitter may be a laser or radio transmitter. It will also be appreciated that, in other embodiments of the invention, each transducer 32 may include a transmitter and receiver that are separate from each other.

The microprocessor is programmed to perform the overall controlling function for the operation of the pig 20, including controlling the transmitters, the receivers, and the data logger. The signals received by each receiver are analysed by the microprocessor, and the data produced by the microprocessor is stored in the data logger. Data corresponding to the signals received by each receiver may also be stored directly in the data logger. The provision of the data logger permits subsequent transfer of the stored data to other storage mediums external to the pig 20, such as a USB drive or a hard disk drive..

In use, each transducer 32 can detect the condition of the tube 22. The condition of the tube 22 may include, but is not limited to, a size of a bore of the tube 22, a thickness of a wall of the tube 22, a fault in a wall of the tube 22, and a thickness of material build-up on an interior or exterior wall of the tube 22. As the pig 20 travels along the interior of the tube 22, each transducer 32 can be utilised to detect the interior and exterior conditions of the tube 22 along the direction of travel of the pig 20 along the interior of the tube 22.

A plurality of annular, circular alignment implements 34 is fitted around the circumference of the support body 24, and arranged to be spaced apart lengthwise along the exterior of the support body 24 and between the nose cones 30. Spacer rings 36 are arranged between the alignment implements 34, and between the alignment implements 34 and the transducer body 26. Brush bristles 38 are provided around the circumference of the rims of the alignment implements 34. It is envisaged that, in other embodiments of the invention, the brush bristles 38 may be replaced by another flexible material, such as plastic rims. The use of brush bristles 38 ensures a sliding fit of the pig 20 within the tube 22 to assist in the driving of the pig 20 through the tube 22. The diameter of the alignment implements 34 may vary to match the size of the bore of the tube 22.

The alignment implements 34 may be releasably mounted on the support body 24 to enable replacement of damaged alignment implements 34 and/or use of different sized alignment implements 34 according to the internal diameter of the tube 22 that is to be inspected. In addition to supporting the pig 20 within the tube 22, the alignment implements 34 also provide a surface for bearing a fluid pressure that drives the pig 20 along the tube 22. The quantity and positions of alignment implements 34 in the pig 20 may vary. The alignment implements 34 may be of any suitable material, such as polyurethane, polyethylene or nylon. The bristle density and length of the brushes may be selected according to the tube diameter and type.

The alignment implements 34 engage an interior wall of the tube 22 so as to keep the pig 20 centred within the tube 22 when it is travelling along the interior of the tube 22. This allows each transducer 32 to be placed in an optimal sensing position relative to the tube 22. Preferably the transducers 32 are arranged to be equidistant from the interior wall of the tube 22 so as to be perpendicular to the interior wall in order to enable a given reflected ultrasonic signal to return to the transducer 32 from which the signal was transmitted.

The rotary drive units 28 are housed inside the bores of the support body sections 24a,24b. Each rotary drive unit 28 includes a brushless DC rotary motor 40 and a rechargeable battery 42. The rechargeable batteries 42 function as a source of power for the rotary motors 40. In other embodiments of the invention, each brushless DC rotary motor may be replaced by another type of motor, another type of rotary motor, or another type of rotary drive device.

Each rotary motor 40 is coupled to the transducer body 26 via a respective rotary coupling 44 so as to enable the rotary motors 40 to drive a rotation of the transducer body 26 relative to the support body 24. Thrust and radial bearings 46 are arranged about the rotary couplings 44. Sealing assemblies 48 are also arranged about the rotary couplings 44 to prevent ingress of fluid and contaminants into the bores of the support body sections 24a,24b. In turn this enables each transducer 32 to be rotated around a cross-sectional perimeter of the transducer body 26. The angular velocity of the transducer body 26, and therefore the angular velocities of the transducers 32, is determined by the settings of the rotary motors 40 and by any gearing interconnecting the rotary motors 40 and the transducer body 26.

During the travel of the pig 20 along the interior of the tube 22, the transmitter of each transducer 32 transmits a pulsing ultrasonic signal, which reflects off an internal or external surface of the wall or off material build-up on the interior or exterior wall. The reflected ultrasonic signal is received by the corresponding receiver. This allows the plurality of transducers 32 to provide a set of measurements relating to the condition of the tube 22. As shown in Figure 4, due to the circumferential spacing between the transducers 32, a separation distance is present between adjacent measurements of the aforementioned set of measurements, thus resulting in a limited transducer coverage.

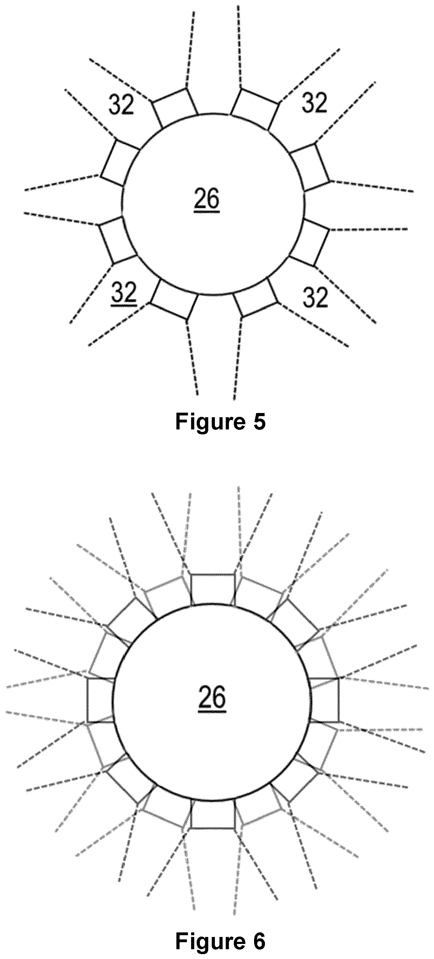

As the pig 20 travels along the interior of the tube 22, the transducers 32 are circumferentially rotated to a new angular position in a plane that is perpendicular or substantially perpendicular to a direction of travel of the pig 20 along the interior of the tube 22, as shown in Figure 5. This results in the plurality of transducers 32 providing another set of measurements relating to the condition of the tube 22. Superimposing the two set of measurements results in an enhanced transducer coverage that provides more accurate information about the condition of the tube 22 in comparison to each set of measurements by itself, as shown in Figure 6.

The rotation of each transducer 32 may be configured so that the transducer coverage of each transducer 32 follows a rotating pattern, track or path, preferably a helical pattern, track or path, along the length of the tube 22.

By transmitting pulsing ultrasonic signals at a sufficient frequency and simultaneously rotating the transducers 32 at a sufficient angular velocity, it is possible to achieve overlapping circumferential and/or axial transducer coverage, preferably up to 100% overlapping circumferential and/or axial transducer coverage that does not have any separation distance between adjacent measurements. This can be repeated throughout the travel of the pig 20 along the interior of the tube 22.

It will be appreciated that the motion of the pig 20 along the tube 22 may be temporarily paused while the transducers 32 are circumferentially rotated to a new angular position in the plane that is perpendicular or substantially perpendicular to a direction of travel of the pig 20 along the interior of the tube 22.

In contrast, if the angular positions of the transducers 32 are fixed relative to the plane that is perpendicular or substantially perpendicular to the direction of travel of the pig 20 along the interior of the tube 22, each transducer 32 only travels in a direction parallel to the direction of travel of the tube 22. This means that the transducer coverage is limited to a plurality of "lines" of measurements extending along the length of the tube 22, with a separation distance between adjacent lines of measurements. Consequently, the condition of the remaining part of the tube 22 falling outside the limited transducer coverage cannot be monitored, which not only results in an inaccurate determination of the overall condition of the tube 22, but can have disastrous consequences due to the inability to detect wall faults, such as localised defects (in particular, localised metallurgical defects for metallic walls), or substantial material build-up inside or outside the tube 22.

The configuration of the pig 20 of the invention therefore results in a more accurate and cost-effective way of monitoring the internal and external conditions of the tube 22.

The analysis of the returned signals can be configured to discriminate between different materials that are building up on the interior or exterior wall of the tube 22, and/or can be configured to provide an estimate of the wall thickness of the tube 22 to, for example, monitor for flaws, thinning, wear or corrosion. In this way corrosion or erosion of the tube 22 can be noted before it occurs to a damaging extent, and preventative maintenance can be planned into the normal operation of the tube 22, thereby avoiding undesirable downtime and enhancing the cost-effectiveness of the operation of the tube 22.

The monitoring of the tube 22 may be carried out subsequent to a tube cleaning operation to determine its effectiveness, and/or may be carried out at other times, for example on a regular basis to help establish a clear understanding of developing patterns of characteristics of the tube 22. In addition, regular tube inspection can be archived to produce trends of degradation so that a minimum condition can be confidently forecasted, providing data for the construction of an informed remaining life assessment and/or fitness for service assessment.

Optionally the pig 20 may include an on-board dynamo (not shown) which is configured to convert kinetic energy from the physical rotation of the transducer body 26 into electrical energy for powering the rotary motors 40 and/or the electronics associated with the transducers. The on-board dynamo may be electrically coupled to the batteries in the pig 20 in order to enable recharging of the batteries 42 during the use of the pig 20 to inspect the tube 22. This has the benefit of prolonging the longevity of use of the pig 20 in a single run, thus enabling the use of the pig 20 in longer tubes 22.

Further optionally the pig 20 may include an on-board gyroscope (not shown) that is able to, at any given time, measure an angular position of the transducer body 26, and therefore an angular position of each transducer 32, in the plane that is perpendicular or substantially perpendicular to the direction of travel of the pig 20 along the interior of the tube 22. This enables the angular positions of the transducers 32 at any given time to be mapped to the current circumferential orientation of the tube 22 in order to provide an accurate determination of the condition of the tube 22.

The configuration of the pig 20 of the invention enables the movement of each transducer 32 in the plane that is perpendicular or substantially perpendicular to a direction of travel of the pig 20 along the interior of the tube 22. In other words, at any given point in time, each transducer 32 is enabled to move relative to a cross-section of the tube 22 that is perpendicular or substantially perpendicular to the direction of travel of the pig 20 along the interior of the tube 22. By moving each transducer 32 in this manner as the pig 20 travels along the interior of the tube 22, the coverage of each transducer 32 can be readily extended to enable detection of the condition of a larger part, or the whole, of the tube 22.

The use of an untethered pig 20 with all of its components encapsulated within a single body enables more accurate inspection of a wider range of tubes of varying diameters, and enables it to manoeuvre and pass more easily through a variety of tube geometry, such as straight, bent (including U-bends), serpentine and meandering. In particular, the single body is capable of traversing box headers, which are also known as "horseshoes" and/or "mule ears". The smooth movement of the pig 20 through the tube 22 provides improved accelerometer data, which can be used to more accurately pinpoint the location of the pig 20. Additionally, the use of the single body allows the direction of travel of the pig 20 to be readily reversed. The use of the single body also enables a reduction in the overall weight of the pig 20 so as to result in smoother travel of the pig through the tube 22, particularly in the vertical direction.

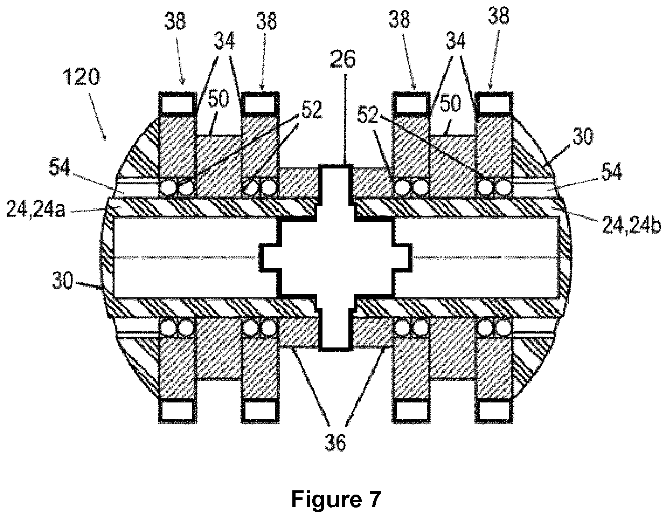

A pig according to a second embodiment of the invention is shown in Figure 7 and is designated generally by the reference numeral 120. The pig 120 of Figure 7 is similar in structure and operation to the pig 20 of Figure 1, and like features share the same reference numerals.

The pig 120 of Figure 7 differs from the pig 20 of Figure 1 in that, in the pig 120 of Figure 7, the transducer body 26 is fixed between the support body sections 24a,24b, instead of being able to rotate relative to the support body sections 24a,24b. In addition, the pig 120 of Figure 7 includes a rotary drive unit in the form of a fluid energy conversion mechanism, instead of the rotary drive units 28 including the brushless DC rotary motors and rechargeable batteries.

The fluid energy conversion mechanism includes turbine assemblies 50 that are arranged between the alignment implements 34, with each turbine assembly 50 housing turbine guide vanes that are fixed to the support body 24. Radial bearings 52 are fitted between the alignment implements 34 and the support body 24 so that, in use, the support body 24 is rotatable relative to the alignment implements 34. Spacer rings 36 are arranged between the alignment implements 34 and the transducer body 26.

Each nose cone 30 includes an opening 54 through which fluid can enter or exit the interior of the pig 20. As the pig 20 travels along the interior of the tube 22, fluid flows into the opening of the nose cone 30 at the front end of the support body 24 and flows out of the opening of the nose cone 30 at the rear end of the support body 24. The fluid flowing through the interior of the pig 20 is guided to flow through the turbine assemblies 50 to cause rotation of the turbine guide vanes and thereby cause rotation of the transducer body 26. In this manner the fluid energy conversion mechanism converts energy from the flowing fluid to drive the rotation of the transducer body 26 and thereby drive the rotation of the transducers 32 in the plane that is perpendicular or substantially perpendicular to the direction of travel of the pig 20 along the interior of the tube 22. Such rotation of the transducers 32 can be used to increase the transducer coverage in the same manner as described above with reference to the embodiment of Figure 1.

It is envisaged that, in other embodiments of the invention, the fluid energy conversion mechanism may be incorporated in either or both of the nosecones 30.

Optionally the fluid energy conversion mechanism may include a flow rate controller to control a flow rate of fluid flowing through the fluid energy conversion mechanism. This provides the fluid energy conversion mechanism with a way of adjusting the rotation of each transducer 32 to match the condition detection requirements of the tube 22.

Further optionally the pig 20 may include a speed regulator in the form of a centrifugal clutch that is operably coupled to the transducer body 26 in order to control the angular velocity of each transducer 32 in the plane that is perpendicular or substantially perpendicular to the direction of travel of the pig 20 along the interior of the tube 22. In other embodiments of the invention, the centrifugal clutch may be replaced by any other type of rotational speed regulator.

It is envisaged that, in other embodiments of the invention, the drive unit 28 may employ both the motors 40 and the fluid energy conversion mechanism. It is also envisaged that, in still other embodiments of the invention, the speed regulator may be used with the motors 40 in the embodiment of Figure 1.

The material for the components of the pig 20,120 may vary to provide the pig 20,120 with specific properties, such as durability, flexibility, and sealing for protection against the environment which includes, for example, the fluid (e.g. water) used to drive the pig 20,120 along the interior of the tube 22, the fluid flowing in the tube 22, and contaminants in the tube 22.

One or more features of the pig disclosed in EP 2 653 238 A, particularly features of the single body of the pig disclosed in EP 2 653 238 A, may be used in combination with the embodiments 20,120 of Figures 1 and 7 as well as other embodiments of the invention.

It will be appreciated that the features of the above embodiments 20,120 are merely chosen to help illustrate the working of the invention, and are not intended to be limiting on the scope of the invention.

The listing or discussion of a prior-published document in this specification should not necessarily be taken as an acknowledgement that the document is part of the state of the art or is common general knowledge.

## Claims

1. A pig for inspecting a tubular object, the pig configured for travel along an interior of the tubular object, the pig comprising a transducer body, the transducer body including at least one transducer for detecting a condition of the tubular object, wherein the or each transducer is configured to, in use, move in a plane that is perpendicular or substantially perpendicular to a direction of travel of the pig along the interior of the tubular object.

2. A pig according to Claim 1 wherein the or each transducer is configured to, in use, rotate in the plane that is perpendicular or substantially perpendicular to the direction of travel of the pig along the interior of the tubular object.

3. A pig according to any one of the preceding claims including a support body configured to, in use, support the transducer body when the pig is travelling along the interior of the tubular object, wherein the support body is configured to, in use, engage an interior wall of the tubular object so as to align the transducer body relative to the tubular object, preferably wherein the support body includes at least one support body section, and the transducer body is operably connected to the or each support body section to permit movement of the transducer body in the plane that is perpendicular or substantially perpendicular to a direction of travel of the pig along the interior of the tubular object.

4. A pig according to any one of the preceding claims wherein the or each transducer includes a transmitter and a receiver, the transmitter is configured to, in use, transmit a signal for enabling the or each transducer to detect a condition of the tubular object, and the receiver is configured to, in use, receive the signal transmitted by the transmitter.

5. A pig according to any one of the preceding claims including a drive unit operably coupled to the transducer body, wherein the drive unit is configured to, in use, mechanically drive the movement of the or each transducer in the plane that is perpendicular or substantially perpendicular to the direction of travel of the pig along the interior of the tubular object.

6. A pig according to Claim 5 wherein the drive unit includes a motor operably coupled to the transducer body, and the motor is configured to, in use, mechanically drive the movement of the or each transducer in the plane that is perpendicular or substantially perpendicular to the direction of travel of the pig along the interior of the tubular object.

7. A pig according to Claim 5 or Claim 6 wherein the drive unit includes a fluid energy conversion mechanism operably coupled to the transducer body, the fluid energy conversion mechanism is arranged to, in use, receive a fluid and permit the fluid to flow therethrough, and the fluid energy conversion mechanism is configured to, in use, convert energy from the flowing fluid to mechanically drive the movement of the or each transducer in the plane that is perpendicular or substantially perpendicular to the direction of travel of the pig along the interior of the tubular object.

8. A pig according to Claims 2 and 7 wherein the fluid energy conversion mechanism is configured to, in use, convert energy from the flowing fluid to mechanically drive the rotation of the or each transducer in the plane that is perpendicular or substantially perpendicular to the direction of travel of the pig along the interior of the tubular object.

9. A pig according to Claim 7 or Claim 8 wherein the fluid energy conversion mechanism includes a turbine or impellor.

10. A pig according to any one of Claims 7 to 9 wherein the fluid energy conversion mechanism includes a flow rate controller to control a flow rate of fluid flowing through the fluid energy conversion mechanism.

11. A pig according to any one of Claims 5 to 10 including a speed regulator operably interconnecting the drive unit and the transducer body, and the speed regulator is configured to, in use, control a speed of movement of the or each transducer in the plane that is perpendicular or substantially perpendicular to the direction of travel of the pig along the interior of the tubular object, preferably wherein the speed regulator includes a centrifugal clutch.

12. A pig according to any one of the preceding claims including a position detector configured to, in use, measure a position of the or each transducer in the plane that is perpendicular or substantially perpendicular to the direction of travel of the pig along the interior of the tubular object.

13. A pig according to any one of the preceding claims including an energy harvesting device operably coupled to the transducer body, wherein the energy harvesting device is configured to, in use, convert kinetic energy from the movement of the or each transducer into electrical energy, preferably wherein the energy harvesting device includes an electrical generator.

14. A pig according to any one of the preceding claims including a single body configuration.

15. A method of using a pig to inspect a tubular object, the pig configured for travel along an interior of the tubular object, the pig comprising a transducer body, the transducer body including at least one transducer for detecting a condition of the tubular object, the method comprising the step of moving the or each transducer in a plane that is perpendicular or substantially perpendicular to a direction of travel of the pig along the interior of the tubular object.
